# EUROPEAN PATENT APPLICATION

(11) **EP 3 626 937 A1**
(43) Date of publication of application: **25.03.2020**
(21) Application number: 18824314.1
(22) Date of filing: 04.06.2018
(51) Int. Cl.: F01K 25/10, F01D 13/02, F01K 23/04, F25B 27/02

(54) **THERMAL ENERGY RECOVERY DEVICE AND THERMAL ENERGY RECOVERY METHOD**

(30) Priority: 26.06.2017 JP 2017123980
(71) Applicant: Kabushiki Kaisha Kobe Seiko Sho (Kobe Steel, Ltd.), Kobe-shi, Hyogo 651-8585 (JP)
(72) Inventor: TAKAHASHI, Kazuo, Kobe-shi, Hyogo 651-2271 (JP)
(74) Representative: TBK
(86) International application number: PCT/JP2018/021317
(87) International publication number: WO 2019/003807

(57) **Abstract**

A thermal energy recovery system (10) comprises: a heating medium circuit (12) adapted to be connected to a heat source heat exchanger 1; a first binary generator (14) including a first heater (14b); a second binary generator (16) including a second heater (16b) for heating a second working medium by the heating medium in a lower temperature range than in the first heater (14b); and a regenerative heat exchanger (18) for heating the heating medium flowing from the second heater (16b) toward the heat source heat exchanger (1) by the heating medium flowing from the first heater (14b) toward the second heater (16b).

## Description

### Technical Field

The present invention relates to a thermal energy recovery system and a thermal energy recovery method.

### Background Art

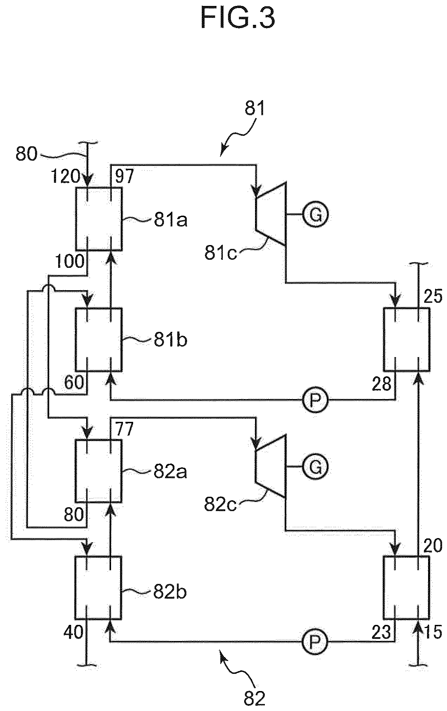

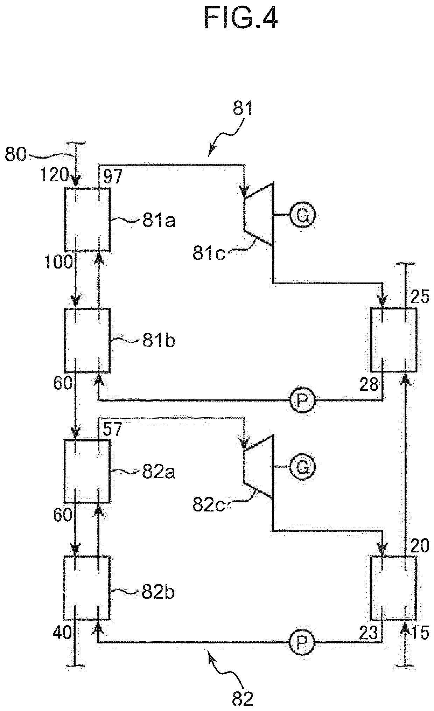

There are known conventional thermal energy recovery systems for generating electricity by using heat from a heat source fluid, as disclosed in Patent Literature 1. The thermal energy recovery system disclosed in Patent Literature 1 is configured such that two power generating devices 81 and 82 are connected in series to a flow channel through which a heat source fluid flows, as shown in FIGS. 3 and 4. Specifically, the thermal energy recovery system includes the first power generating device 81 configured as a binary generator connected to an upstream portion of the flow channel 80, and the second power generating device 82 configured as a binary generator connected to a downstream portion of the flow channel 80. The first power generating device 81 includes a first heater having an evaporator 81a and a preheater 81b, and an expander 81c for expanding a working fluid vaporized in the evaporator 81a. The second power generating device 82 also includes a second heater having an evaporator 82a and a preheater 82b, and an expander 82c for expanding a working fluid vaporized in the evaporator 82a. In the configuration shown in FIG. 3, the heat source fluid flowing out of the evaporator 81a of the first heater is directly introduced into the evaporator 82a of the second heater through the flow channel 80. On the other hand, in the configuration shown in FIG. 4, the heat source fluid flowing out of the evaporator 81a of the first heater is introduced into the evaporator 82a of the second heater via the preheater 81b of the first heater.

In the configuration shown in FIG. 3, the heat source fluid flowing out of the evaporator 81a of the first heater is directly introduced into the evaporator 82a of the second heater. Consequently, the heat source fluid temperature at the outlet side of the evaporator 81a of the first heater is equal to the heat source fluid temperature at the inlet side of the evaporator 82a of the second heater. Therefore, the temperature difference between the working fluid temperature at the outlet side of the evaporator 81a of the first heater and the working fluid temperature at the outlet side of the evaporator 82a of the second heater is approximately equal to the temperature difference between the heat source fluid temperatures at the inlet side and at the outlet side of the evaporator 81a of the first heater. For example, in Patent Literature 1, the working fluid temperature at the outlet side of the evaporator 81a of the first heater is 97°C, and the working fluid temperature at the outlet side of the evaporator 82a of the second heater is 77°C. Thus, there is a temperature difference of 20°C. On the other hand, the heat source fluid temperature at the inlet side of the evaporator 81a of the first heater is 120°C, and the heat source fluid temperature at the outlet side (which is the temperature equal to the heat source fluid temperature at the inlet side of the evaporator 82a of the second heater) is 100°C. Thus, there is a temperature difference of 20°C. Therefore, when the heat source fluid temperature at the inlet side (for example, 120°C) and the heat source fluid temperature at the outlet side (for example, 100°C) of the first heater of the first generating device 81 are determined, the relationship between these temperatures allows determination of the inlet side temperature of the expander 82c of the second generating device. This allows determination of the configuration of the expander 82c. Thus, in the configuration shown in FIG. 3, when the heat source fluid temperatures at the inlet side and at the outlet side of the first heater (evaporator 81a) of the first generating device 81 are respectively set to 120°C and 100°C, the expander 82c of the second generating device 82 will be designed in such a way as to exhibit a high power generation efficiency when expanding a working fluid of 77°C, for example. Therefore, to adopt the configuration shown in FIG. 3, it is necessary to design the second power generating device 82 (more specifically, the second expander 82c) exclusively for use with the first generating device. Therefore, even when there is an existing power generating device that includes an expander which exhibits a high power generation efficiency when expanding a working fluid of 57°C, for example, it cannot be used without modification.

On the other hand, in the configuration shown in FIG. 4, the heat source fluid flowing out of the evaporator 81a of the first heater is introduced into the evaporator 82a of the second heater via the preheater 81b of the first heater. In this configuration, the temperature difference between the evaporator 81a of the first heater and the evaporator 82a of the second heater is greater than that in the configuration shown in FIG. 3. For example, the working fluid temperature at the outlet side of the evaporator 81a of the first heater is 97°C, and the working fluid temperature at the outlet side of the evaporator 82a of the second heater is 57°C. Therefore, the configuration shown in FIG. 4 makes it possible, by using the preheater 81b, to use an expander that exhibits a high power generation efficiency in a lower temperature range than that required by the configuration shown in FIG. 3. This makes it possible to use an existing power generation device (more specifically, the second expander 82c) without modification. On the other hand, the configuration shown in FIG. 4 has the following problem.

Patent Literature 1 does not specify what the flow channel 80 for the heat source fluid is connected to. However, in the case of recovering energy from steam or the like, for example, the flow channel 80 for allowing flow of the heat source fluid may be connected to a heat source heat exchanger for extracting heat from steam or the like. In this case, the flow channel 80 makes it possible to provide a configuration in which the heat source fluid circulates between the heat source heat exchanger and the first and second heaters. In this case, the amount of heat extracted from steam or the like in the heat source heat exchanger may be limited. In such a case, if the temperature range of the evaporator 81a of the first heater is apart from the temperature range of the evaporator 82a of the second heater, the temperature of the heat source fluid returned to the heat source heat exchanger will be too low. Consequently, the temperature of the heat source fluid returned to the heat source heat exchanger will gradually decrease despite an attempt to continue the operation of the system, resulting in a problem that stable operation cannot be achieved.

### Citation List

### Patent Literature

Patent Literature 1: Japanese Unexamined Patent Publication No. Hei 1-285607

### Summary of Invention

It is an object of the present invention to provide a thermal energy recovery system that includes two binary generators having different temperature ranges at which a high power generation efficiency is obtained and a thermal energy recovery method using the thermal energy recovery system, the system and method being capable of eliminating the need to design one binary generator according to the temperature range of the other binary generator. In addition, it is an object of the present invention to allow the thermal energy recovery system to stably operate when connected to a heat source heat exchanger.

A thermal energy recovery system according to an aspect of the present invention is a thermal energy recovery system adapted to be connected to a heat source heat exchanger, comprising: a heating medium circuit adapted to be connected to the heat source heat exchanger so as to return a heating medium heated in the heat source heat exchanger to the heat source heat exchanger; a first binary generator including a first circulation circuit for circulating a first working medium therethrough, and a first heater connected to the heating medium circuit and to the first circulation circuit, the first heater being operable to heat the first working medium by the heating medium; a second binary generator including a second circulation circuit for circulating a second working medium therethrough, and a second heater connected to the heating medium circuit and to the second circulation circuit, the second heater being operable to heat the second working medium by using the heating medium in a lower temperature range than in the first heater; and a regenerative heat exchanger for heating the heating medium flowing from the second heater toward the heat source heat exchanger by the heating medium flowing from the first heater toward the second heater.

A thermal energy recovery method according to an aspect of the present invention is a thermal energy recovery method, comprising: a first heating step of flowing a heating medium heated in a heat source heat exchanger into a first heater of a first binary generator to heat, by the heating medium, a first working medium flowing through a first circulation circuit; a second heating step of introducing the heating medium cooled by the first working medium in the first heater into a second heater of a second binary generator to heat, by the heating medium, a second working medium flowing through a second circulation circuit; and a regenerative heating step of heating the heating medium flowing from the second heater toward the heat source heat exchanger by the heating medium flowing from the first heater toward the second heater.

### Brief Description of Drawings

FIG. 1 is a schematic view showing a configuration of a thermal energy recovery system according to an embodiment of the present invention.
FIG. 2 is a schematic view showing a configuration of a thermal energy recovery system according to another embodiment of the present invention.
FIG. 3 is a schematic view showing a configuration of a conventional thermal energy recovery system.
FIG. 4 is a schematic view showing a configuration of the conventional thermal energy recovery system.

### Description of Embodiments

Hereinafter, an embodiment of the present invention will be described in detail with reference to the accompanying drawings.

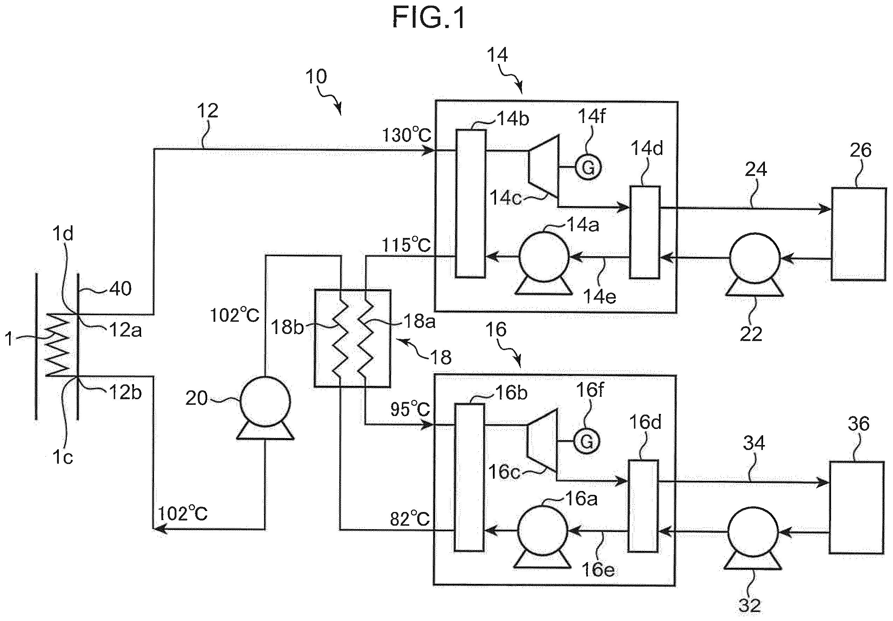

As shown in FIG. 1, a thermal energy recovery system 10 according to the present embodiment is a system for recovering steam energy produced by, for example, a boiler, as electrical energy. The thermal energy recovery system 10 is adapted to be connected to a heat source heat exchanger 1 that includes heat transfer tubes disposed in a pipe line 40 through which hot steam flows. The heat source heat exchanger 1 including the heat transfer tubes has one end 1d connectable to one end (first end) 12a of a heating medium circuit 12 described later and the other end 1c connectable to the other end 12b (second end) of the heating medium circuit 12. The heat source heat exchanger 1 is configured to heat a heating medium by using the hot steam flowing through the pipe line 40.

As shown in FIG. 1, the thermal energy recovery system 10 according to the present embodiment includes the heating medium circuit 12 containing the heating medium, a first binary generator 14, a second binary generator 16, a regenerative heat exchanger 18 and a pump 20.

The heating medium circuit 12 is connectable to the heat source heat exchanger 1. Specifically, the one end (first end) 12a of the heating medium circuit 12 is connectable to the heating medium outlet 1d of the heat source heat exchanger 1, and the other end (second end) 12b of the heating medium circuit 12 is connectable to the heating medium inlet 1c of the heat source heat exchanger 1. When the heating medium circuit 12 is connected to the heat source heat exchanger 1, the heating medium circuit 12 and the heat source heat exchanger 1 form a closed loop flow path. The heating medium flowing out of the heat source heat exchanger 1 returns to the heat source heat exchanger 1 after passing through the heating medium circuit 12.

The heating medium circuit 12 includes a pipe line forming the one end (first end) 12a and connected to the first binary generator 14. The first binary generator 14 is connected to the heating medium circuit 12 and generates electricity by using thermal energy of the heating medium flowing through the heating medium circuit 12. The first binary generator 14 includes a circulation circuit (first circulation circuit 14e) for circulating a first working medium therethrough, the circulation circuit including a first working pump 14a, a first heater 14b, a first expander 14c, and a first condenser 14d. The first working pump 14a is driven to circulate the first working medium through the first circulation circuit 14e. The first working medium is a refrigerant with a low boiling point, such as R245fa. In other words, in the first binary generator 14, the first working pump 14a, the first heater 14b, the first expander 14c and the first condenser 14d form an Organic Rankine Cycle. The first working pump 14a is constituted by a variable speed pump.

The first working pump 14a is configured to pressurize the first working medium to a predetermined pressure.

The first heater 14b is disposed at the discharge side of the first working pump 14a. The first heater 14b is configured to heat and thereby vaporize the first working medium by using the heating medium.

The first expander 14c expands the gaseous first working medium produced by the first heater 14b. The first expander 14c includes a rotor (not shown) connected to a first power generating device 14f, and the rotor of the first expander 14c is rotated by the expansion of the first working medium. This allows the first power generating device 14f to generate electricity.

The first condenser 14d cools the working medium expanded in the first expander 14c, by using a coolant (such as cooling water), to thereby condense the gaseous first working medium. The coolant is circulated through a first cooling circuit 24 by driving a first pump 22. The first cooling circuit 24 is connected to a first cooler 26. The coolant circulates between the first cooler 26 and the first condenser 14d.

The first heater 14b is configured as an evaporator for vaporizing the first working medium, but the first heater 14b is not limited to this configuration. For example, the first heater 14b may be configured to include an evaporator, and a preheater for preheating a first working medium to be introduced into the evaporator. Alternatively, the first heater 14b may be configured to include an evaporator, and a superheater for superheating a first working fluid vaporized by the evaporator.

The second binary generator 16 is connected to the heating medium circuit 12 at a potion downstream of the first binary generator 14 and generates electricity by using thermal energy of the heating medium. The second binary generator 16 includes a circulation circuit (second circulation circuit 16e) for circulating a second working medium therethrough, the circulation circuit including a second working pump 16a, a second heater 16b, a second expander 16c, and a second condenser 16d. The second working pump 16a is driven to circulate the second working medium through the second circulation circuit 16e. The second working medium is a refrigerant with a low boiling point, such as R245fa. In other words, in the second binary generator 16, the second working pump 16a, the second heater 16b, the second expander 16c and the second condenser 16d form an Organic Rankine Cycle. The second working pump 16a is constituted by a variable speed pump.

The second working pump 16a is configured to pressurize the second working medium to a predetermined pressure.

The second heater 16b is disposed at the discharge side of the second working pump 16a. The second heater 16b is configured to heat and thereby vaporize the second working medium by using the heating medium.

The second expander 16c expands the gaseous second working medium produced by the second heater 16b. The second expander 16c includes a rotor (not shown) connected to a second power generating device 16f, and the rotor of the second expander 16c is rotated by the expansion of the second working medium. This allows the second power generating device 16f to generate electricity. The second condenser 16d cools the working medium expanded in the second expander 16c, by using a coolant (such as cooling water), to thereby condense the gaseous second working medium. The coolant is circulated through a second cooling circuit 34 by driving a second pump 32. The second cooling circuit 34 is connected to a second cooler 36. The coolant circulates between the second cooler 36 and the second condenser 16d.

The second heater 16b is configured as an evaporator for vaporizing the second working medium, but the second heater 16b is not limited to this configuration. For example, the second heater 16b may be configured to include an evaporator, and a preheater for preheating a second working medium to be introduced into the evaporator. Alternatively, the second heater 16b may be configured to include an evaporator, and a superheater for superheating a second working fluid vaporized by the evaporator.

The second binary generator 16 is configured to be suitable for generating electricity by using thermal energy in a lower temperature range than that of the first binary generator 14. In other words, the temperature (inlet side temperature) of the heating medium flowing into the second heater 16b of the second binary generator 16 is lower than the temperature (outlet side temperature) of the heating medium flowing out of the first heater 14b of the first binary generator 14 by 10°C or more, for example. For example, the temperature of the heating medium flowing into the first heater 14b is about 130°C, the temperature of the heating medium flowing out of the first heater 14b is about 115°C, and the temperature of the heating medium flowing into the second heater 16b is about 95°C. Consequently, the temperature of the gaseous second working medium that is introduced into the second expander 16c in the second circulation circuit 16e is lower than the temperature of the gaseous first working medium that is introduced into the first expander 14c in the first circulation circuit 14e by 10°C or more, for example. Therefore, the pressure of the gaseous second working medium that is introduced into the second expander 16c is considerably lower than the pressure of the gaseous first working medium that is introduced into the first expander 14c. Accordingly, the second expander 16c is configured to efficiently rotate the rotor with a lower inlet side pressure than that of the first expander 14c. The second binary generator 16 is therefore configured to generate electricity with high efficiency in a lower pressure range than that of the first binary generator 14. In other words, the inlet side pressure (or the outlet side pressure) of the second expander 16c at which the power generation efficiency of the second binary generator 16 reaches its peak is considerably lower than the inlet side pressure (or the outlet side pressure) of the first expander 14c at which the power generation efficiency of the first binary generator 14 reaches its peak. Therefore, the power generation efficiency of the second binary generator 16 decreases at pressures higher or lower than described. A binary generator having such property is selected from existing binary generators for use as the second binary generator 16 without modification.

The first expander 14c has a greater expansion ratio than the second expander 16c. For example, the expansion ratio of the first expander 14c is about twice the expansion ratio of the second expander 16c. This makes it possible to increase the amount of generated electricity by utilizing the heat-drop of the first working medium on the higher temperature side.

The regenerative heat exchanger 18 is a heat exchanger including a primary flow channel 18a and a secondary flow channel 18b. The primary flow channel 18a is connected to a portion of the heating medium circuit 12 between the first heater 14b and the second heater 16b. The secondary flow channel 18b is connected to a portion of the heating medium circuit 12 downstream of the second heater 16b, more specifically, a portion between the second heater 16b and the pump 20.

The pump 20 is connected to a portion of the heating medium circuit 12 downstream of the regenerative heat exchanger 18. The pump 20 generates a driving force for circulating the heating medium through the heating medium circuit 12. The heating medium circuit 12 includes a pipe line connected to the outlet of the pump 20 and having a distal end forming the other end (second end) 12b. The heating medium contained in the heating medium circuit 12, which is pressurized to atmospheric pressure or above, circulates through the heating medium circuit 12 while remaining in liquid form without boiling.

Now a method for recovering thermal energy using the thermal energy recovery system 10 will be described. In the thermal energy recovery system 10, the pump 20 is driven to circulate the heating medium through the heating medium circuit 12.

The heating medium is heated in the heat source heat exchanger 1 by the steam flowing through the pipe line 40. The heating medium is pressurized, so that it remains in liquid form without boiling even when heated to about 130°C, for example. In other words, the heating medium is in the form of hot water. The heating medium flows through the heating medium circuit 12 into the first heater 14b of the first binary generator 14. In the first heater 14b, the heating medium heats the first working medium (a first heating step). In the present embodiment, the first working medium in liquid form vaporizes into gaseous form in the first heater 14b. On the other hand, the heating medium is cooled in the first heater 14b to a temperature of about 115°C, for example. Also at this time, the heating medium remains in liquid form.

The heating medium cooled by the first working medium in the first heater 14b is introduced into the primary flow channel 18a of the regenerative heat exchanger 18. The heating medium flowing through the primary flow channel 18a exchanges heat with the heating medium flowing through the secondary flow channel 18b, thereby being further cooled. The heating medium at this time has a temperature of about 95°C, for example, and is still in liquid form as warm water.

The heating medium cooled in the regenerative heat exchanger 18 flows into the second heater 16b of the second binary generator 16. In the second heater 16b, the heating medium heats the second working medium (a second heating step). In the present embodiment, the second working medium in liquid form vaporizes into gaseous form in the second heater 16b. On the other hand, the heating medium is further cooled in the second heater 16b to a temperature of about 82°C, for example. Also at this time, the heating medium remains in liquid form. In other words, the heating medium remains in the form of warm water.

The heating medium flowing out of the second heater 16b flows toward the heat source heat exchanger 1, but is introduced into the secondary flow channel 18b of the regenerative heat exchanger 18 before flowing into the heat source heat exchanger 1. The heating medium flowing through the secondary flow channel 18b is heated by the heating medium flowing through the first flow channel 18a from the first heater 14b toward the second heater 16b (a regenerative heating step). This makes it possible to prevent a situation in which the heat source heat exchanger 1 cannot obtain a sufficient amount of heat because of the heating medium cooled in the second heater 16b being directly introduced into the heat source heat exchanger 1.

In the first binary generator 14, the first working medium vaporized in the first heater 14b is introduced into the first expander 14c to rotate the rotor of the first expander 14c. This allows the first power generating device 14f to generate electricity. Thus, the thermal energy of steam applied to the heating medium in the heat source heat exchanger 1 is recovered as electrical energy in the first binary generator 14. The first working medium expanded in the first expander 14c is cooled to condense by the coolant in the first condenser 14d, and the resultant liquid first working medium is pressurized by the pump 20 and is thereby introduced into the first heater 14b. Such circulation of the first working medium is repeated in the first binary generator 14.

In the second binary generator 16, the second working medium vaporized in the second heater 16b is introduced into the second expander 16c to rotate the rotor of the second expander 16c. This allows the second power generating device 16f to generate electricity. Thus, the thermal energy of steam applied to the heating medium in the heat source heat exchanger 1 is recovered as electrical energy also in the second binary generator 16. The second working medium expanded in the second expander 16c is cooled to condense by the coolant in the second condenser 16d, and the resultant liquid second working medium is pressurized by the pump 20 and is thereby introduced into the second heater 16b. Such circulation of the second working medium is repeated in the first binary generator 14.

As described above, in the present embodiment, when the heating medium circuit 12 is connected to the heat source heat exchanger 1, the heating medium heated in the heat source heat exchanger 1 is introduced into the first heater 14b of the first binary generator 14 to heat the first working medium. Consequently, the temperature of the first working medium decreases. The heating medium having a lower temperature than before flowing into the first heater 14b further reduces its temperature by heating, in the regenerative heat exchanger 18, the heating medium flowing from the second heater 16b. The heating medium having the further reduced temperature after passing through the regenerative heat exchanger 18 heats the second working medium in the second heater 16b of the second binary generator 16. Thus, the second heater 16b is suitably designed to heat the second working medium by using the heating medium being in a lower temperature range than in the first heater 14b. Therefore, an existing binary generator having a temperature range, at which a high power generation efficiency is obtained, lower than that of the first binary generator 14 can be used as the second binary generator 16 without modification. In other words, the second binary generator 16 is capable of generating electricity with high efficiency without being modified to adjust the temperature range, at which the second binary generator 16 exhibits a high power generation efficiency, to the temperature range of the heating medium flowing out of the first heater 14b. On the other hand, since the second binary generator 16 is set to a lower temperature range than the first binary generator 14, the temperature of the heating medium flowing out of the second heater 16b toward the heat source heat exchanger 1 is accordingly low. However, the heating medium flowing from the second heater 16b toward the heat source heat exchanger 1 is heated in the regenerative heat exchanger 18 by the heating medium flowing from the first heater 14b toward the second heater 16b. This prevents the heating medium returning to the heat source heat exchanger 1 from becoming too low in temperature. Therefore, even in the case where the amount of heat obtained in the heat source heat exchanger 1 cannot be adjusted, the heating medium is prevented from being insufficiently heated. In other words, it is possible to suppress increase in the amount of heat applied to the heating medium in the heat source heat exchanger 1.

Further, in the present embodiment, the heating medium circulates through the heating medium circuit 12 while remaining in liquid form. This makes it possible to prevent the heating medium from boiling somewhere in the heating medium circuit 12, even when there is a change in the amount of heat applied to the heating medium by the heat source medium. Therefore, it is possible to stabilize the heat recovery efficiency and to facilitate dealing with the heating medium as compared to dealing with a gaseous heating medium.

Further, in the present embodiment, the expander of the first binary generator 14 has a greater expansion ratio than the expander of the second binary generator 16. This makes it possible to increase the amount of generated electricity by utilizing the heat-drop of the first working medium on the higher pressure side.

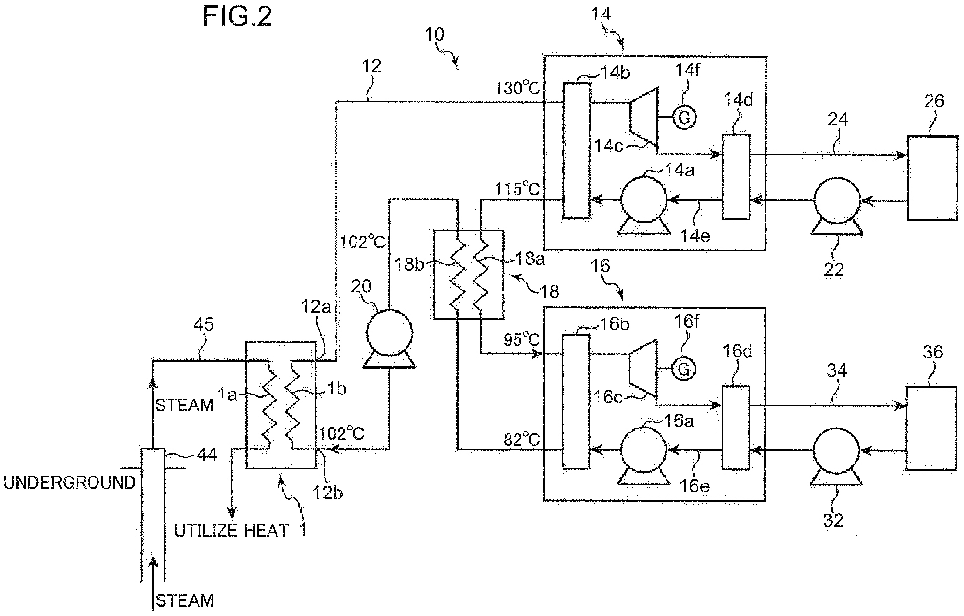

The present invention is not limited to the above-described embodiment and may be variously changed and modified without departing from the spirit thereof. For example, the heat source heat exchanger 1 may be configured to be buried in the ground to extract geothermal heat. For example, a heat source heat exchanger 1 connectable to the thermal energy recovery system 10 includes a primary heat-transfer tube 1a and a secondary heat-transfer tube 1b, as shown in FIG. 2. The primary heat-transfer tube 1a is connected to a pipe line 45 connected to a steam extraction pipe 44 buried in the ground. The secondary heat-transfer tube 1b is connectable to the heating medium circuit 12. The one end (first end) 12a of the heating medium circuit 12 is connectable to one end of the secondary heat-transfer tube 1b, and the other end (second end) 12b of the heating medium circuit 12 is connectable to the other end of the secondary heat-transfer tube 1b.

The configurations shown in FIGS. 1 and 2 are not limited to those for circulating the heating medium through the heating medium circuit 12 while maintaining it in liquid form. It may be configured such that part of the heating medium to be introduced into the first heater 14b turns into gaseous form and condenses in the first heater 14b or the regenerative heat exchanger 18.

Further, the configurations shown in FIGS. 1 and 2 are not limited to those in which the first expander 14c has a greater expansion ratio than the second expander 16c, and it may be configured such that the first expander 14c and the second expander 16c have the same expansion ratio.

The above-described embodiment is summarized below.
(1) The thermal energy recovery system according to the above-described embodiment is a thermal energy recovery system adapted to be connected to a heat source heat exchanger, comprising: a heating medium circuit adapted to be connected to the heat source heat exchanger so as to return a heating medium heated in the heat source heat exchanger to the heat source heat exchanger; a first binary generator including a first circulation circuit for circulating a first working medium therethrough, and a first heater connected to the heating medium circuit and to the first circulation circuit, the first heater being operable to heat the first working medium by the heating medium; a second binary generator including a second circulation circuit for circulating a second working medium therethrough, and a second heater connected to the heating medium circuit and to the second circulation circuit, the second heater being operable to heat the second working medium by using the heating medium in a lower temperature range than in the first heater; and a regenerative heat exchanger for heating the heating medium flowing from the second heater toward the heat source heat exchanger by the heating medium flowing from the first heater toward the second heater.
   In the above-described embodiment, when the heating medium circuit is connected to the heat source heat exchanger, the heating medium flowing through the heating medium circuit after being heated in the heat source heat exchanger heats the first working medium in the first heater of the first binary generator. Consequently, the temperature of the heating medium decreases. The heating medium having a lower temperature than before flowing into the first heater heats, in the regenerative heat exchanger, the heating medium flowing from the second heater. Consequently, the heating medium further reduces its temperature. The heating medium having the further reduced temperature after passing through the regenerative heat exchanger heats the second working medium in the second heater of the second binary generator. The second heater has a suitable design for heating the second working medium by using the heating medium being in a lower temperature range than in the first heater. Therefore, an existing binary generator having a temperature range, at which a high power generation efficiency is obtained, lower than that of the first binary generator can be used as the second binary generator without modification. In other words, the second binary generator is capable of generating electricity with high efficiency without being modified to adjust the temperature range, at which the second binary generator exhibits a high power generation efficiency, to the temperature range of the heating medium flowing out of the first heater. On the other hand, the second binary generator is set to a lower temperature range than the first binary generator. Therefore, the temperature of the heating medium flowing out of the second heater toward the heat source heat exchanger is accordingly low. However, the heating medium flowing from the second heater toward the heat source heat exchanger is heated in the regenerative heat exchanger by the heating medium flowing from the first heater toward the second heater. This prevents the heating medium returning to the heat source heat exchanger 1 from becoming too low in temperature. Therefore, even in the case where the amount of heat obtained in the heat source heat exchanger cannot be adjusted, the heating medium is prevented from being insufficiently heated. In other words, it is possible to suppress increase in the amount of heat applied to the heating medium in the heat source heat exchanger.
(2) The heating medium circuit may be configured to circulate the heating medium while maintaining the heating medium in liquid form. In this configuration, the heating medium circulates through the heating medium circuit while remaining in liquid form. This makes it possible to prevent the heating medium from boiling somewhere in the heating medium circuit, even when there is a change in the amount of heat applied to the heating medium by a heat source medium. Therefore, it is possible to stabilize the heat recovery efficiency and to facilitate dealing with the heating medium as compared to dealing with a gaseous heating medium.
(3) The first binary generator may include a first expander for expanding the first working medium heated into gaseous form by the first heater. In addition, the second binary generator may include a second expander for expanding the second working medium heated into gaseous form by the second heater. In this case, it is preferable that the first expander has a greater expansion ratio than the second expander. In this configuration, the expander of the first binary generator has a greater expansion ratio than the expander of the second binary generator. This makes it possible to increase the amount of generated electricity by utilizing the heat-drop of the first working medium on the higher pressure side.
(4) The thermal energy recovery method according to the above-described embodiment is a thermal energy recovery method, comprising: a first heating step of flowing a heating medium heated in a heat source heat exchanger into a first heater of a first binary generator to heat, by the heating medium, a first working medium flowing through a first circulation circuit; a second heating step of introducing the heating medium cooled by the first working medium in the first heater into a second heater of a second binary generator to heat, by the heating medium, a second working medium flowing through a second circulation circuit; and a regenerative heating step of heating the heating medium flowing from the second heater toward the heat source heat exchanger by the heating medium flowing from the first heater toward the second heater.
(5) In the above-described thermal energy recovery method, the heating medium may be made to circulate through the heating medium circuit while remaining in liquid form.
(6) In the above-described thermal energy recovery method, the first circulation circuit may include a first expander and the second circulation circuit may include a second expander, the first expander having a greater expansion ratio than the second expander.

As described above, the above-described embodiment makes it possible to provide a thermal energy recovery system that includes two binary generators having different temperature ranges at which a high power generation efficiency is obtained and a thermal energy recovery method using the thermal energy recovery system, the system and method being capable of eliminating the need to design one binary generator according to the temperature range of the other binary generator. In addition, the above-described embodiment makes it possible to allow the thermal energy recovery system to stably operate when connected to a heat source heat exchanger.

## Claims

1. A thermal energy recovery system adapted to be connected to a heat source heat exchanger, comprising:
a heating medium circuit adapted to be connected to the heat source heat exchanger so as to return a heating medium heated in the heat source heat exchanger to the heat source heat exchanger;
a first binary generator including a first circulation circuit for circulating a first working medium therethrough, and a first heater connected to the heating medium circuit and to the first circulation circuit, the first heater being operable to heat the first working medium by the heating medium;
a second binary generator including a second circulation circuit for circulating a second working medium therethrough, and a second heater connected to the heating medium circuit and to the second circulation circuit, the second heater being operable to heat the second working medium by the heating medium in a lower temperature range than in the first heater; and
a regenerative heat exchanger for heating the heating medium flowing from the second heater toward the heat source heat exchanger by the heating medium flowing from the first heater toward the second heater.

2. The thermal energy recovery system according to claim 1, wherein
the heating medium circuit is configured to circulate the heating medium while maintaining the heating medium in liquid form.

3. The thermal energy recovery system according to claim 1 or 2, wherein:
the first binary generator includes a first expander for expanding the first working medium heated into gaseous form by the first heater;
the second binary generator includes a second expander for expanding the second working medium heated into gaseous form by the second heater; and
the first expander has a greater expansion ratio than the second expander.

4. A thermal energy recovery method, comprising:
a first heating step of flowing a heating medium heated in a heat source heat exchanger into a first heater of a first binary generator to heat, by the heating medium, a first working medium flowing through a first circulation circuit;
a second heating step of introducing the heating medium cooled by the first working medium in the first heater into a second heater of a second binary generator to heat, by the heating medium, a second working medium flowing through a second circulation circuit; and
a regenerative heating step of heating the heating medium flowing from the second heater toward the heat source heat exchanger by the heating medium flowing from the first heater toward the second heater.

5. The thermal energy recovery method according to claim 4, wherein
the heating medium circulates through the heating medium circuit while remaining in liquid form.

6. The thermal energy recovery method according to claim 4 or 5, wherein
the first circulation circuit includes a first expander and the second circulation circuit includes a second expander, the first expander having a greater expansion ratio than the second expander.
